# EUROPÄISCHE PATENTSCHRIFT

(11) **EP 3 760 030 B1**
(45) Veröffentlichungstag und Bekanntmachung des Hinweises auf die Patenterteilung: **17.08.2022**
(21) Anmeldenummer: 20000195.6
(22) Anmeldetag: 26.05.2020
(51) Int. Cl.: A01F 15/08, A01F 15/12

(54) **BALLENPRESSE**
BALING PRESS
PRESSE À BALLES

(30) Priorität: 29.05.2019 DE 102019003769
(43) Veröffentlichungstag der Anmeldung: 06.01.2021
(73) Patentinhaber: Maschinenfabrik Bernard Krone GmbH & Co. KG, 48480 Spelle (DE)
(72) Erfinder: Hermes, Alexander, 49509 Recke (DE); Frische, Tobias, 48477 Hörstel (DE)

(56) Entgegenhaltungen:
- EP-A1- 1 077 024
- EP-A1- 3 384 759
- DE-B3-102010 027 539

## Beschreibung

Die Erfindung betrifft eine Ballenpresse zur Herstellung landwirtschaftlicher Erntegutballen aus Heu, Stroh oder dgl. landwirtschaftlichen Erntegut nach dem Oberbegriff des Patentanspruchs 1. Derartige Ballenpressen sind für sich in einer Vielzahl von verschiedenen Ausführungsformen bekannt.

In der DE 10 2010 027 539 B3 ist eine Ballenpresse zur Herstellung landwirtschaftlicher Erntegutballen offenbart, bei der an beiden Längsseiten Vorratsbehälter zur Aufnahme von Bindegarnrollen untergebracht sind. Das Bindegarn dieser Bindegarnrollen wird während des Einsatzes der Ballenpresse einem innerhalb der Presseinrichtung entstehenden Erntegutballen zugeführt und um den Erntegutballen herumgeschnürt, so dass der fertige Erntegutballen nach dem Auswurf aus der Presseinrichtung auch weiterhin seine Form und Festigkeit beibehält. In der Betriebsstellung befinden sich die Vorratsbehälter in einer großen Höhe über dem Erdboden und nahe beabstandet zu der Presseinrichtung an den Längsseiten der Ballenpresse. Zur Befüllung der Vorratsbehälter mit neuen, unverbrauchten Bindegarnrollen können die Vorratsbehälter in eine Beladestellung verbracht werden, in der sich diese in einer geringen Höhe über dem Erdboden sowie in einem großen seitlichen Abstand zur Presseinrichtung befinden. Aufgrund der großen Kapazität an mitzuführenden Bindegarnrollen verdecken die Vorratsbehälter zur Aufnahme der Bindegarnrollen an den Längsseiten der Ballenpresse in der Betriebsstellung nahezu alle wichtigen Antriebs- und Funktionselemente der Presseinrichtung. In der Beladestellung der Vorratsbehälter für die Bindegarnrollen werden die Vorratsbehälter zwar in großen Abstand weit nach außen verlagert, eine gute Zugänglichkeit zu den Antriebs- und Funktionselementen an den Längsseiten der Ballenpresse dennoch nicht. Insbesondere für Reinigungs- und Reparaturarbeiten an den Längsseiten der Ballenpresse ist eine verbesserte Zugänglichkeit wünschenswert.

Ausgabe der Erfindung ist es daher, eine Ballenpresse zur Herstellung von landwirtschaftlichen Erntegutballen bereit zu stellen, bei der die Mängel des Standes der Technik nicht mehr zu Tage treten.

Erfindungsgemäß wird diese Aufgabe durch die Merkmale des kennzeichnenden Teiles des Anspruchs 1 gelöst. Vorteilhafte Ausgestaltungen der Erfindung ergeben sich aus den weiteren Ansprüchen.

Nach der Erfindung wird eine Ballenpresse zur Herstellung landwirtschaftlicher Erntegutballen vorgeschlagen, die als auf Rädern gestützte, selbstfahrende oder als an eine Zugmaschine angehängte und angetriebene Erntemaschine das Erntegut über Aufnahme- und Fördereinrichtungen aufnimmt und einer Presseinrichtung zuführt, die das Erntegut zu Ballen formt, wobei die Ballen für einen dauerhaften Zusammenhalt mit Binde- bzw. Wickelmaterial umspannt werden, welches von Binde- bzw. Wickelmaterialrollen dem Ballen zugeführt wird, die in zumindest einem an der Ballenpresse angeordneten Vorratsbehälter untergebracht sind, wobei der zumindest eine Vorratsbehälter aus einer Betriebsstellung, in der der Vorratsbehälter in einer großen Höhe über dem Erdboden und seitlich nahe beabstandet zur Presseinrichtung angeordnet ist, in eine Beladestellung verlagerbar ist, in der sich der zumindest eine Vorratsbehälter in einer geringen Höhe über dem Erdboden und seitlich weit beabstandet zur Presseinrichtung befindet, wobei der zumindest eine Vorratsbehälter weiterhin in eine Wartungsstellung verbringbar ausgebildet ist, in der der zumindest eine Vorratsbehälter um eine in Fahrtrichtung gerichtete, etwa horizontale Schwenkachse aus der Betriebsstellung in eine, einen betreffenden seitlichen Bereich der Presseinrichtung freigebende Stellung überführbar ist, wobei der zumindest eine Vorratsbehälter über eine zumindest zwei Lenker umfassende Lenkeranordnung, deren freie Enden mit einer Rahmenbaugruppe verbunden sind, schwenkbar abgestützt ist. Die Ballenpresse zeichnet sich dadurch aus, dass ein die Schwenkbewegung des Vorratsbehälters einleitendes Stellglied an dem Vorratsbehälter angelenkt ist.

Weiterhin zeichnet sich die Ballenpresse dadurch aus, dass die Rahmenbaugruppe durch ein Freigabe- oder Verriegelungsglied gegenüber dem Rahmen festleg- bzw. verriegelbar ist, um eine zuverlässige Überführung des zumindest einen Vorratsbehälters aus der Betriebsstellung in die Wartungsstellung zu ermöglichen. Das Freigabe- oder Verriegelungsglied ist weiterhin erfindungsgemäß dazu ausgebildet, ein Arretierungsglied, das zur Arretierung oder Freigabe der Schwenkbewegung des Vorratsbehälters gegenüber der Rahmenbaugruppe vorgesehen ist, in einer verriegelten Stellung des Freigabe- oder Verriegelungsgliedes in eine Freigabestellung zu verlagern.

Die Erfindung zeigt also in vorteilhafter Weise eine Lösung auf, bei der der zumindest eine Vorratsbehälter für die Bindegarnrollen neben einer Betriebsstellung, einer Beladestellung auch noch in eine Wartungsstellung verbracht werden kann, in der die wichtigen Antriebs- und Funktionselemente der Presseinrichtung, die durch den zumindest einen Vorratsbehälter für die Bindegarnrollen in der Betriebsstellung weitestgehend verdeckt sind, für Reparatur- oder Reinigungsarbeiten optimal zugänglich sind. Um diese Zugänglichkeit erreichen zu können, ist es vorgesehen, dass der zumindest eine Vorratsbehälter für die Bindegarnrollen um eine in Fahrtrichtung gerichtete, etwa horizontale Schwenkachse an einer Halterung gemäß der Erfindung angebracht ist, die sowohl das Absenken des zumindest einen Vorratsbehälters für die Bindegarnrollen in eine bodennahe Beladestellung als auch in eine die Längsseiten der Ballenpresse freigebende Stellung erlaubt. In einer vorteilhaften Ausführungsform ist diese erfindungsgemäße Halterung aus einer Lenkeranordnung gebildet, welche aus zumindest zwei, an einem Rahmen der Ballenpresse angelenkten Lenkern besteht, die an Ihren freien Enden mit einer Rahmenbaugruppe verbunden sind. Diese Rahmenbaugruppe enthält dabei die in Fahrtrichtung gerichtete, etwa horizontale Schwenkachse zur Anlenkung des zumindest einen Vorratsbehälters für die Bindegarnrollen.

Damit eine sichere und zuverlässige Verlagerung des zumindest einen Vorratsbehälters für die Bindegarnrollen aus der Betriebsstellung in die Wartungsstellung oder aus der Betriebsstellung in die Beladestellung durchgeführt werden kann, ist es zunächst vorgesehen, dass der Rahmenbaugruppe der Lenkeranordnung das Freigabe- oder Verriegelungsglied zugeordnet ist, welches bei der Überführung des zumindest einen Vorratsbehälters aus der Betriebsstellung in die Beladestellung dazu ausgebildet ist, dass der Vorratsbehälter fest mit der Rahmenbaugruppe der Lenkeranordnung verbunden ist. Ein vom Rahmen der Ballenpresse sich erstreckendes und an dem Vorratsbehälter für die Bindegarnrollen angelenktes Stellglied ist nun dazu eingerichtet, die Lenkeranordnung zwischen der Betriebsstellung und der Beladestellung hin und her zu verlagern. Als Stellglied kann an Stelle einer hydraulischen Kolben-Zylinder-Anordnung auch ein elektrisch oder pneumatisch anzusteuerndes Zug-Druckelement verwendet werden. Beim Absenken des zumindest einen Vorratsbehälters aus der Betriebsstellung in die Beladestellung ist eine Zunahme der Länge des Stellgliedes notwendig, während zur Verlagerung aus der Beladestellung in die Betriebsstellung eine Zugkraft aufzubringen ist.

Für eine zuverlässige Arretierung des zumindest einen Vorratsbehälters in der Betriebsstellung ist des Weiteren das Arretierungsglied vorgesehen, mit dem die Rahmenbaugruppe der Lenkanordnung gegenüber dem Rahmen der Ballenpresse festlegbar ausgebildet ist. Gemäß einer vorteilhaften Weiterbildung der Erfindung ist dieses Arretierungsglied so ausgestaltet, dass dieses in der Sperrstellung, also in der Stellung, in der die Rahmenbaugruppe ortsfest mit dem Rahmen der Ballenpresse verbunden ist, derart auf das Freigabe- und Verriegelungsglied der Rahmenbaugruppe einwirkt, dass die Verriegelungswirkung des Freigabe- oder Verriegelungsgliedes aufgehoben wird. Der zumindest eine Vorratsbehälter für die Bindegarnrollen kann nun unter dem Einfluss einer Druckkraft des Stellgliedes in die Wartungsstellung um die in Fahrtrichtung gerichtete, etwa horizontale Schwenkachse verschwenkt werden.

Zur Überführung des zumindest einen Vorratsbehälters aus der Betriebsstellung in die Beladestellung ist es vorgesehen, dass das Arretierungsglied aus der Sperrstellung in eine Freigabestellung verlagerbar ist. Dabei wird die Wirkung des Arretierungsgliedes gegenüber dem Freigabe- oder Verriegelungsgliedes der Rahmenbaugruppe aufgehoben. Aufgrund einer vorteilhaften Gestaltung, nämlich durch den Einfluss der Schwerkraft ist das Freigabe- oder Verriegelungsglied dazu eingerichtet, eine Verriegelung des zumindest einen Vorratsbehälters mit der Rahmenbaugruppe zu bewirken. Somit ist eine zuverlässige Verlagerung des zumindest einen Vorratsbehälters aus der Betriebsstellung in die Beladestellung und umgekehrt erreichbar.

Um die begrenzten Abmessungen der Ballenpresse im Hinblick auf die maximal zulässige Maschinenbreite gemäß der Straßenverkehrszulassungsordnung zu erfüllen, ist eine speziell definierte Zuordnung der Anlenkstellen des Stellgliedes in Bezug auf die Ausgestaltung der zumindest zwei Lenker der Lenkeranordnung zu beachten. In einer vorteilhaften Ausführungsform der Lenkeranordnung sind die Anlenkstellen des Stellgliedes in der Betriebsstellung so angeordnet, dass diese außerhalb eines Bereiches gelegen sind, der durch eine durch die Anlenkstellen der Lenker verlaufende Kontur umgrenzt ist. Erst durch diese eng definierten Gestaltungsvorgaben wird es ermöglicht, dass die Lenkeranordnung sich in der Betriebsstellung sehr eng an die Presseinrichtung anlehnt und somit keine zusätzliche Maschinenbreite durch die Vorratsbehälter für die Bindegarnrollen, die die maximale Breite der Ballenpresse maßgeblich bestimmen, verursacht wird.

Nachfolgend wird ein vorteilhaftes Ausführungsbeispiel der Erfindung anhand einer Zeichnung beschrieben. In der Zeichnung zeigt:
- Fig. 1:: eine perspektivische Darstellung einer erfindungsgemäßen Ballenpresse mit an einer Längsseite in die Beladestellung abgesenkten Vorratsbehälter;
- Fig. 2:: eine schematische Darstellung einer erfindungsgemäßen Lenkeranordnung zur Anordnung eines Vorratsbehälters an der Ballenpresse in einer Betriebsstellung;
- Fig. 3:: eine schematische Darstellung einer erfindungsgemäßen Lenkeranordnung zur Anordnung eines Vorratsbehälters an der Ballenpresse in einer Wartungsstellung;
- Fig. 4:: eine schematische Darstellung einer erfindungsgemäßen Lenkeranordnung zur Anordnung eines Vorratsbehälters an der Ballenpresse in einer Beladestellung;
- Fig. 5:: eine schematische Darstellung einer erfindungsgemäßen Lenkeranordnung nach Fig. 2 in einer Seitenansicht;

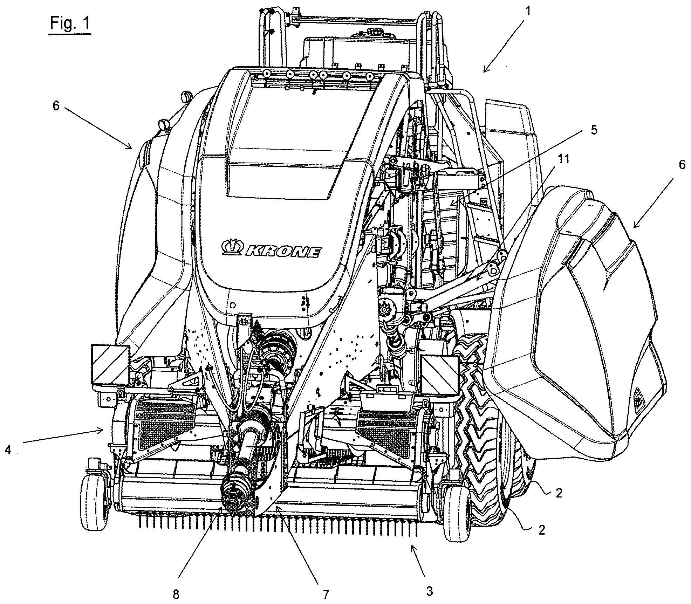

Eine Ballenpresse 1 in der Art einer auf Rädern 2 abgestützten Quaderballenpresse ist in Fig. 1 näher dargestellt und umfasst eine Aufnahmeeinrichtung 3 und Fördereinrichtungen 4 zur Aufnahme und Förderung von Heu, Stroh oder dgl. landwirtschaftlichen Erntegut zu einer Presseinrichtung 5, in der das Erntegut zu quaderförmigen Erntegutballen verdichtet und von Bindegarnsträngen umschnürt wird. Das zur Umschnürung der verdichteten Erntegutballen erforderliche Bindegarn wird dabei aus zumindest einem Vorratsbehälter6 der Ballenpresse 1 entnommen und über geeignete Führungen der Presseinrichtung 5 zugeführt. In aller Regel sind heutige Ballenpressen jeweils an ihren Längsseiten mit je einem Vorratsbehälter 6 versehen. Bei der in dieser Figur dargestellten Ballenpresse 1 befindet sich der Vorratsbehälter 6 an der in Fahrtrichtung linken Längsseite in der Beladestellung, in der sich der Vorratsbehälter 6 in einer geringen Höhe über dem Erdboden sowie in einem großen seitlichen Abstand zur Presseinrichtung 5 befindet. In dieser Stellung kann der Vorratsbehälter 6 in vorteilhafter Weise ohne weitere Hilfsmittel mit neuen ungebrauchten Bindegarnrollen befüllt werden. An der in Fahrtrichtung rechten Längsseite der Ballenpresse 1 ist der Vorratsbehälter 6 dagegen in der Betriebsstellung dargestellt und befindet sich in großer Höhe über dem Erdboden und nahe beabstandet zur Presseinrichtung 6. An der Vorderseite der Ballenpresse befindet sich eine Deichsel 7 zum Anhängen an eine landwirtschaftliche Zug- und Antriebsmaschine, von der aus die Ballenpresse 1 auch über eine Gelenkwelle 8 mit Antriebsenergie versorgt wird.

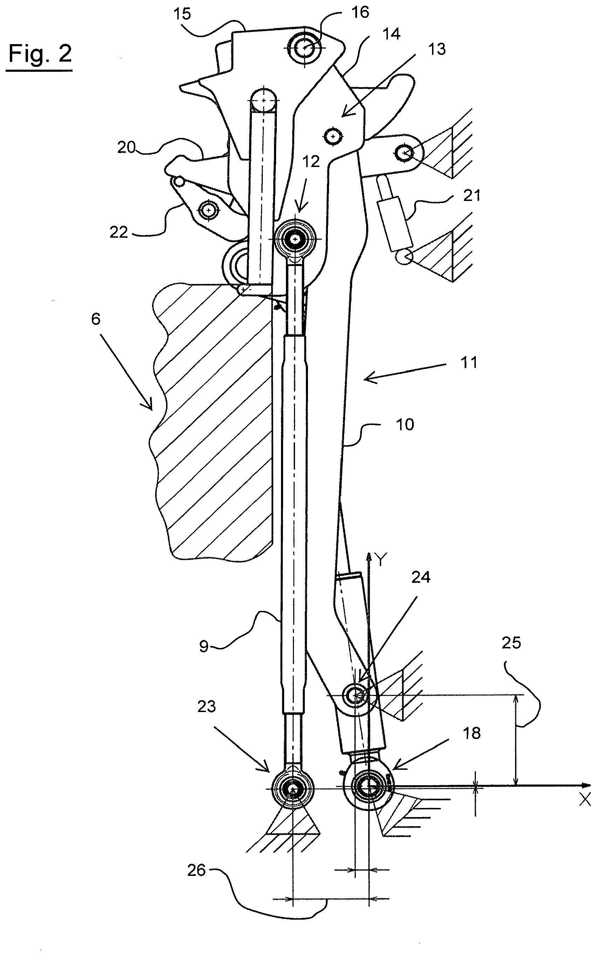

Aus Gründen einer verbesserten Übersichtlichkeit ist in den weiteren Figuren 2 bis 5 eine Ausführungsform einer erfindungsgemäßen Halterung zur Anbringung des zumindest einen Vorratsbehälters 6 an den Längsseiten einer Ballenpresse 1 in einer von der Ballenpresse 1 losgelösten, schematischen Darstellung wiedergegeben. In Fig. 2 ist dabei gezeigt, wie der Vorratsbehälter 6 sich in einer platzsparenden Anbringung befindet, wobei der Vorratsbehälter 6 sich auf einer aus zumindest zwei Lenkern 9,10 gebildeten Lenkeranordnung 11 gegenüber dem Rahmen der Ballenpresse 1 abstützt. Der Rahmen der Ballenpresse 1 ist dabei dadurch angedeutet, dass den Enden der Lenker 9,10 schematisch Festlager angesetzt sind. Weiterhin zeigt sich hier, dass an den freien Enden 12,13 der Lenker 9,10 eine Rahmenbaugruppe 14 angeschlossen ist. Diese Rahmenbaugruppe 14 bildet die Aufnahme für ein Trägerelement 15 des Vorratsbehälters 6 für die Bindegarnrollen, wobei das Trägerelement 15 des Vorratsbehälters 6 um eine in Fahrtrichtung gerichtete, etwa horizontale Schwenkachse 16 an der Rahmenbaugruppe 14 schwenkbar angebracht ist.

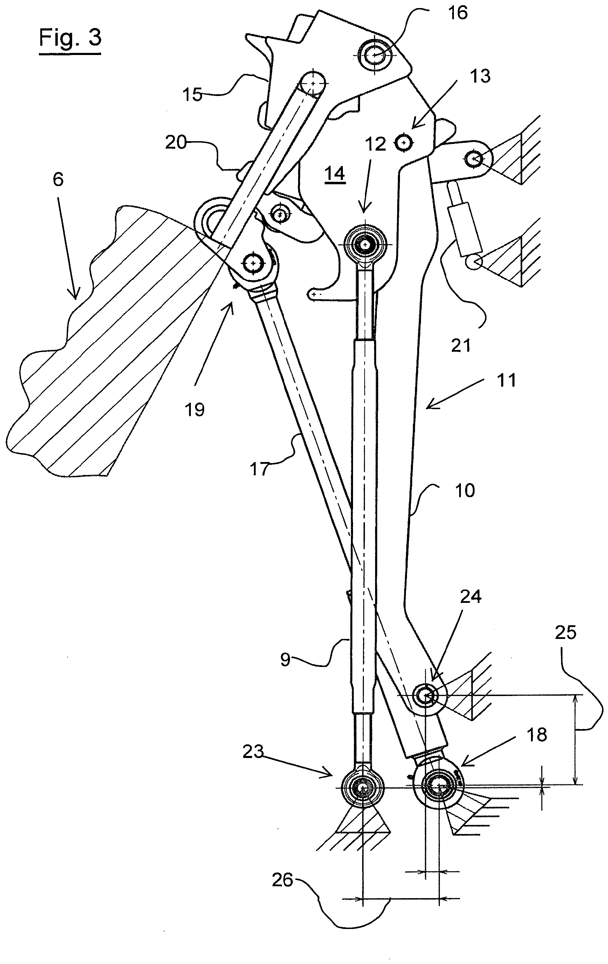

In Fig. 3 ist der zumindest eine Vorratsbehälter 6 für die Bindegarnrollen in der Wartungsstellung dargestellt. Hierzu ist ein Stellglied 17 erforderlich, welches sich von einer Anlenkstelle 18 am Rahmen der Ballenpresse 1 bis zu einer Anlenkstelle 19 am Vorratsbehälter 6 für die Bindegarnrollen erstreckt. Um eine zuverlässige Überführung des zumindest einen Vorratsbehälters 6 aus der Betriebsstellung in die Wartungsstellung zu ermöglichen, ist die Rahmenbaugruppe 14 durch ein Freigabe- oder Verriegelungsglied 20 gegenüber dem Rahmen festleg- bzw. verriegelbar. Zur Betätigung des Freigabe- und Verriegelungsgliedes 20 ist Stellglied 21 vorgesehen, welches hydraulisch, pneumatisch oder elektrisch ansteuerbar ausgebildet ist. Aus der Fig. 3 wird weiterhin deutlich, dass das Freigabe- oder Verriegelungsglied 20 nicht nur zur Verriegelung der Rahmenbaugruppe 14 gegenüber dem Rahmen der Ballenpresse 1 dient, sondern noch eine weitere Funktion erfüllt. Das Freigabe- oder Verriegelungsglied 20 ist derart gestaltet, dass in der verriegelten Stellung des Freigabe- oder Verriegelungsgliedes 20 ein weiteres Arretierungsglied 22 zur Arretierung/Freigabe der Schwenkbewegung des Vorratsbehälters 6 gegenüber der Rahmenbaugruppe 14 in die Freigabestellung verlagert wird. Damit erfüllt das Freigabe- oder Verriegelungsglied 20 eine wichtige Schaltfunktion beim Prozess der Überführung des Vorratsbehälters aus der Betriebsstellung in die Wartungsstellung.

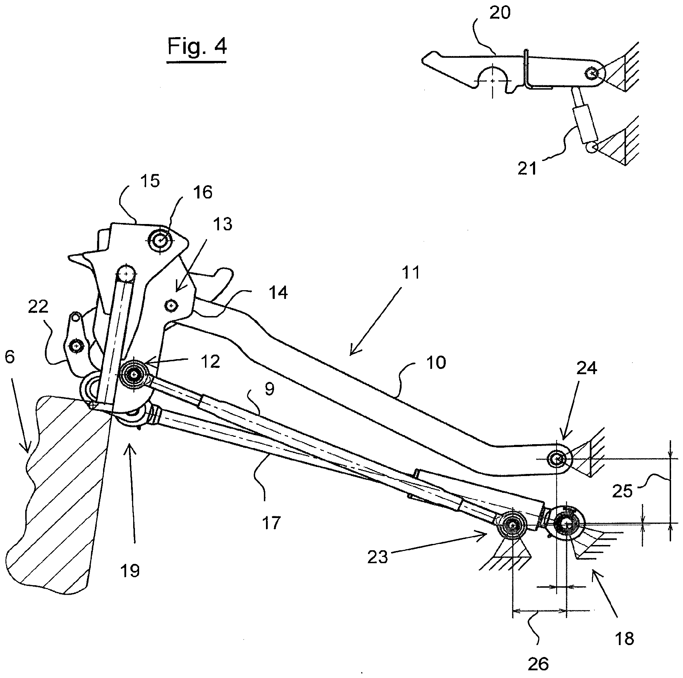

In Fig. 4 ist der Vorratsbehälter dann in der Beladestellung zu sehen. Hier ist deutlich zu erkennen, dass das Arretierungsglied 22 das Trägerelement 15 des Vorratsbehälters 6 gegenüber der Rahmenbaugruppe 14 der Lenkanordnung 11 verriegelt hat. Als Folge des fehlenden Einflusses des Freigabe- oder Verriegelungsgliedes 20 auf das Arretierungsglied 22 hängt dieses aufgrund der Schwerkraft nach unten und unterbindet damit eine Schwenkbewegung des Vorratsbehälters gegenüber der Rahmenbaugruppe 14.

Im Hinblick auf eine möglichst geringe Maschinenbreite der Ballenpresse 1 ist noch auf die vorteilhafte Auslegung und maßliche Gestaltung der Anlenkstellen 23,24 der Lenker 9,10 am Rahmen der Ballenpresse 1 hin zu weisen. Die Anlenkstelle 24 des Lenkers 10 am Rahmen der Ballenpresse liegt vorteilhaft in Bezug zu einem an der Anlenkstelle 18 des Stellgliedes 17 am Rahmen der Ballenpresse angesetzten, ebenen Koordinatensystems auf der positiven Y-Achse in einem Maßbereich 25 zwischen 150 mm und 200 mm sowie auf der X-Achse in einem Bereich kleiner 0. Weiterhin hat es sich als positiv herausgestellt, die Anlenkstelle 23 des Lenkers 9 am Rahmen der Ballenpresse in Bezug zu einem an der Anlenkstelle 18 des Stellgliedes 17 am Rahmen der Ballenpresse angesetzten, ebenen Koordinatensystems auf der negativen X-Achse im Maßbereich 26 zwischen 120 mm und 200 mm sowie auf der Y-Achse in einem Bereich kleiner 0 an zu bringen. Unter diesen konstruktiven Bedingungen ergibt sich in vorteilhafter Weise eine sehr enge und damit wünschenswerte Anlehnung der Lenkeranordnung 11 an den Bereich der Presseinrichtung 5.

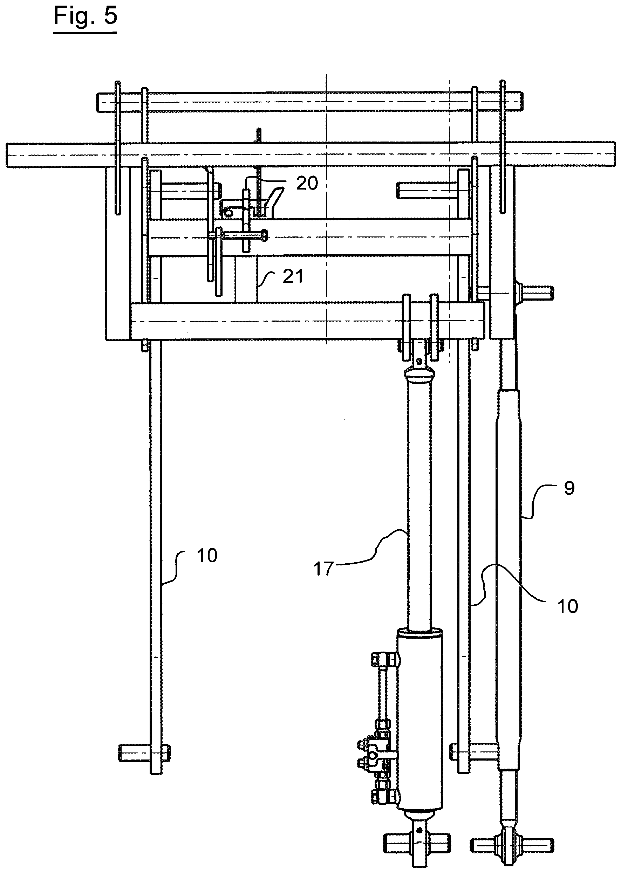

In Fig. 5 ist die Lenkeranordnung 11 in einer Seitenansicht wiedergegeben. Dabei zeigt sich, dass es nicht unbedingt erforderlich ist, an beiden Seiten der Lenkeranordnung auch beide Lenker 9,10 anzubringen. Im Rahmen einer optimalen Ausnutzung der Platzverhältnisse kann die eine oder andere Variante der Anbringung von nur einem Lenker 9 oder 10 und beide Lenker 9,10 an der anderen Seite gewählt werden.

## Patentansprüche

1. Ballenpresse zur Herstellung landwirtschaftlicher Erntegutballen, die als auf Rädern (2) gestützte, selbstfahrende oder als an eine Zugmaschine angehängte und angetriebene Erntemaschine das Erntegut über Aufnahme- (3) und Fördereinrichtungen (4) aufnimmt und einer Presseinrichtung (5) zuführt, die das Erntegut zu Ballen formt, wobei die Ballen für einen dauerhaften Zusammenhalt mit Binde- bzw. Wickelmaterial umspannt werden, welches von Binde- bzw. Wickelmaterialrollen dem Ballen zugeführt wird, die in zumindest einem an der Ballenpresse (1) angeordneten Vorratsbehälter (6) untergebracht sind, wobei der zumindest eine Vorratsbehälter (6) aus einer Betriebsstellung, in der der Vorratsbehälter (6) in einer großen Höhe über dem Erdboden und seitlich nahe beabstandet zur Presseinrichtung (5) angeordnet ist, in eine Beladestellung verlagerbar ist, in der sich der zumindest eine Vorratsbehälter (6) in einer geringen Höhe über dem Erdboden und seitlich weit beabstandet zur Presseinrichtung (5) befindet, wobei der zumindest eine Vorratsbehälter (6) weiterhin in eine Wartungsstellung verbringbar ausgebildet ist, in der der zumindest eine Vorratsbehälter (6) um eine in Fahrtrichtung gerichtete, etwa horizontale Schwenkachse (16) aus der Betriebsstellung in eine, einen betreffenden seitlichen Bereich der Presseinrichtung (5) freigebende Stellung überführt ist, wobei der zumindest eine Vorratsbehälter (6) über eine zumindest zwei Lenker (9,10) umfassende Lenkeranordnung (11), deren freie Enden (12,13) mit einer Rahmenbaugruppe (14) verbunden sind, schwenkbar abgestützt ist, **dadurch gekennzeichnet, dass** an dem Vorratsbehälter (6) ein die Schwenkbewegung des Vorratsbehälters (6) um die horizontale Schwenkachse (16) einleitendes Stellglied (17) angelenkt ist, und die Rahmenbaugruppe (14) zur Überführung des zumindest einen Vorratsbehälters (6) aus der Betriebsstellung in die Wartungsstellung durch ein Freigabe- oder Verriegelungsglied (20) gegenüber dem Rahmen festleg- bzw. verriegelbar ist, wobei das Freigabe- oder Verriegelungsglied (20) dazu ausgebildet ist, ein Arretierungsglied (22), das zur Arretierung oder Freigabe der Schwenkbewegung des Vorratsbehälters (6) gegenüber der Rahmenbaugruppe (14) vorgesehen ist, in einer verriegelten Stellung des Freigabe- oder Verriegelungsglieds (20) in eine Freigabestellung zu verlagern.

2. Ballenpresse nach Anspruch 1, **dadurch gekennzeichnet, dass** der zumindest eine Vorratsbehälter (6) um eine in Fahrtrichtung gerichtete, etwa horizontale Schwenkachse (16) an der Rahmenbaugruppe (14) der Lenkeranordnung (11) schwenkbar angelenkt ist.

3. Ballenpresse nach Anspruch 1 und 2, **dadurch gekennzeichnet, dass** das Freigabe- oder Verriegelungsglied (20) dazu eingerichtet ist, eine Schwenkbewegung des Vorratsbehälters (6) um die in Fahrtrichtung gerichtete, etwa horizontale Schwenkachse (16) der Rahmenbaugruppe (14) zu zulassen oder zu unterbinden.

4. Ballenpresse nach Anspruch 1, **dadurch gekennzeichnet, dass** der Lenkeranordnung (11) ein Stellglied (17) zugeordnet ist, dessen Anlenkstelle (18) an einem Rahmen der Ballenpresse außerhalb eines Bereiches liegt, der von einer durch die Anlenkstellen (12,13,23,24) der Lenker (9,10) führenden Kontur umgrenzt sind.

5. Ballenpresse nach Anspruch 1, **dadurch gekennzeichnet, dass** der Lenkeranordnung (11) ein Stellglied (17) zugeordnet ist, dessen Anlenkstelle (19) an dem Vorratsbehälter (6) außerhalb eines Bereiches liegt, der von einer durch die Anlenkstellen (12,13,23,24) der Lenker (9,10) führenden Kontur umgrenzt sind.

6. Ballenpresse nach zumindest einem der Ansprüche 1 bis 5, **dadurch gekennzeichnet, dass** die Anlenkstelle (24) des Lenkers (10) am Rahmen der Ballenpresse in Bezug zu einem an der Anlenkstelle (18) des Stellgliedes (17) am Rahmen der Ballenpresse angesetzten, ebenen Koordinatensystems auf der positiven Y-Achse in einem Maßbereich (25) zwischen 150 mm und 200 mm sowie auf der X-Achse in einem Bereich kleiner 0 liegt.

7. Ballenpresse nach zumindest einem der Ansprüche 1 bis 5, **dadurch gekennzeichnet, dass** die Anlenkstelle (23) des Lenkers (9) am Rahmen der Ballenpresse in Bezug zu einem an der Anlenkstelle (18) des Stellgliedes (17) am Rahmen der Ballenpresse angesetzten, ebenen Koordinatensystems auf der negativen X-Achse in einem Maßbereich zwischen 120 mm und 200 mm sowie auf der Y-Achse in einem Bereich kleiner 0 liegt.

## Claims

1. Baling press for producing agricultural crop bales, which, as a harvesting machine which is supported on wheels (2) and is self-propelled, or as a driven harvesting machine which is hitched to a tractor, receives the crops by means of receiving devices (3) and conveying devices (4) and feeds said crops to a pressing device (5) which shapes the crops into bales, the bales being covered with binding or wrapping material so as to be held together in a lasting manner, which material is fed to the bale from binding or wrapping material rolls which are accommodated in at least one storage container (6) arranged on the baling press (1), the at least one storage container (6) being movable from an operating position, in which the storage container (6) is arranged at a great height above the ground and laterally close to the pressing device (5), into a loading position, in which the at least one storage container (6) is located at a low height above the ground and laterally far apart from the pressing device (5), the at least one storage container (6) being designed such that it can also be brought into a maintenance position, in which the at least one storage container (6) is transferred out of the operating position about an approximately horizontal pivot axis (16) oriented in the direction of travel and into a position which releases a relevant lateral region of the pressing device (5), the at least one storage container (6) being pivotably supported via a link arrangement (11) comprising at least two links (9, 10), the free ends (12, 13) of which are connected to a frame assembly (14), **characterised in that** an actuator (17) which initiates the pivoting movement of the storage container (6) about the horizontal pivot axis (16) is articulated on the storage container (6), and the frame assembly (14) for transferring the at least one storage container (6) from the operating position into the maintenance position can be fixed or locked relative to the frame or by a release or locking element (20), the release or locking element (20) being designed to move a blocking element (22), which is provided for blocking or releasing the pivoting movement of the storage container (6) relative to the frame assembly (14), into a release position in a locked position of the release or locking element (20).

2. Baling press according to claim 1, **characterised in that** the at least one storage container (6) is articulated on the frame assembly (14) of the link arrangement (11) so as to be pivotable about an approximately horizontal pivot axis (16) oriented in the direction of travel.

3. Baling press according to claims 1 and 2, **characterised in that** the release or locking member (20) is designed to allow or prevent a pivoting movement of the storage container (6) about the approximately horizontal pivot axis (16) of the frame assembly (14) that is oriented in the direction of travel.

4. Baling press according to claim 1, **characterised in that** the link arrangement (11) is associated with an actuator (17), the articulation point (18) of which on a frame of the baling press lies outside a region which is defined by a contour extending through the articulation points (12, 13, 23, 24) of the links (9, 10).

5. Baling press according to claim 1, **characterised in that** the link arrangement (11) is associated with an actuator (17), the articulation point (19) of which on the storage container (6) lies outside a region which is defined by a contour extending through the articulation points (12, 13, 23, 24) of the links (9, 10).

6. Baling press according to at least one of claims 1 to 5, **characterised in that** the articulation point (24) of the link (10) on the frame of the baler, with respect to a planar coordinate system positioned on the articulation point (18) of the actuator (17) on the frame of the baler, is located in a measurement range (25) of between 150 mm and 200 mm on the positive Y-axis and in a range of less than 0 on the X-axis.

7. Baling press according to at least one of claims 1 to 5, **characterised in that** the articulation point (23) of the link (9) on the frame of the baler, with respect to a planar coordinate system positioned on the articulation point (18) of the actuator (17) on the frame of the baler, is located in a measurement range of between 120 mm and 200 mm on the negative X-axis and in a range of less than 0 on the Y-axis.

## Revendications

1. Presse à balles pour réaliser des balles de produits agricoles moissonnés, qui, comme moissonneuse, s'appuyant sur des roues (2), automotrice ou remorquée et entraînée par un tracteur, reçoit le produit moissonné par des installations de prise (3) et de transfert (4) pour les fournir à une installation de presse (5) qui met le produit moissonné en balles,
* les balles étant entourées d'un matériau de nouage ou d'emballage pour un maintien durable des balles, ce matériau étant fourni à partir de rouleaux de matériaux de nouage ou d'emballage à la formation des balles, rouleaux qui sont mis dans au moins un magasin (6) équipant la presse à balles (1),
* au moins ce magasin (6) pouvant être déplacé d'une position de fonctionnement dans laquelle le magasin (6) est à une grande hauteur au-dessus du sol et latéralement près de l'installation de presse (5) jusqu'à une position de chargement dans laquelle ce magasin (6) est à une faible hauteur au-dessus du sol et latéralement très écarté de l'installation de presse (5),
- au moins ce magasin (6) pouvant, en outre, être mis dans une position d'entretien dans laquelle ce magasin (6) peut être transféré autour d'un axe de basculement (16) orienté dans la direction de déplacement, sensiblement horizontale, à partir de sa position de fonctionnement dans une position libérant une région latérale correspondante de l'installation de presse (5),
* au moins ce magasin (6) étant porté de manière à basculer, par un dispositif de bras (11) comprenant au moins deux bras (9, 10) dont les extrémités libres (12, 13) sont reliées à un ensemble formant un châssis (14),
presse à balle **caractérisée en ce que**
- un organe de positionnement (17) est articulé au magasin (6) pour initier le mouvement de basculement du magasin (6) autour de l'axe horizontal (16) de basculement, et
l'ensemble formant un châssis (14) se fixant ou se verrouillant au châssis pour transférer le magasin (6) de sa position de fonctionnement à sa position d'entretien se bloque ou se verrouille au châssis par un organe de libération ou de verrouillage (20),
- l'organe de libération ou de verrouillage (20) est réalisé pour faire passer un organe de blocage (22) dans une position de libération, lorsque l'organe de libération et de verrouillage (20) est en position verrouillée, l'organe de blocage (22) étant prévu pour bloquer ou libérer le mouvement de basculement du magasin (6) par rapport à l'ensemble formant un châssis (14).

2. Presse à balles selon la revendication 1,
**caractérisée en ce que**
le magasin (6) est articulé en basculement autour d'un axe de basculement (16) sensiblement horizontal, orienté dans la direction de déplacement en étant articulé en basculement sur l'ensemble formant un châssis (14) du dispositif de bras (11).

3. Presse à balles selon les revendications 1 et 2,
**caractérisée en ce que**
l'organe de libération ou de verrouillage (20) est conçu pour autoriser ou interdire un mouvement de basculement du magasin (6) autour de l'axe de basculement (16), sensiblement horizontal, orienté dans la direction de déplacement de l'ensemble formant un châssis (14).

4. Presse à balles selon la revendication 1,
**caractérisée en ce que**
un organe de réglage (17) est associé au dispositif de bras (11) et dont le point d'articulation (18) sur un châssis de la presse à balle est à l'intérieur d'une zone délimitée par un contour passant par les points d'articulation (12, 13, 23, 24) des bras (9, 10).

5. Presse à balles selon la revendication 1,
**caractérisée en ce que**
un organe de réglage (17) est associé au dispositif de bras (11), et dont le point d'articulation (19) au magasin (6) est en dehors d'une zone délimitée par un contour passant par les points d'articulation (12, 13, 23, 24) des bras (9, 10).

6. Presse à balles selon l'une des revendications 1 à 5,
**caractérisée en ce que**
dans un système de coordonnées plan, issu du point d'articulation (18) de l'organe de réglage (17) sur le châssis de la presse à balles, le point d'articulation (24) du bras (10) sur le châssis de la presse à balles est situé sur la partie positive de l'axe Y dans une plage de mesures (25) comprise entre 150 mm et 200 mm et sur l'axe X dans une plage inférieure à 0.

7. Presse à balles selon au moins l'une des revendications 1 à 5,
**caractérisée en ce que**
dans un système de coordonnées plan, appliqué au point d'articulation (18) de l'organe de réglage (17) au châssis de la presse à balles, le point d'articulation (23) du bras (9) au châssis de la presse à balles est situé sur la partie négative de l'axe X, dans une plage de mesures comprise entre 120 mm et 200 mm et sur l'axe Y, dans une plage inférieure à 0.
